# EUROPEAN PATENT SPECIFICATION

(11) **EP 3 738 826 B1**
(45) Date of publication and mention of the grant of the patent: **21.12.2022**
(21) Application number: 20305413.5
(22) Date of filing: 29.04.2020
(51) Int. Cl.: B60N 2/879, B60N 2/75

(54) **ACOUSTICALLY INSULABLE SEAT FOR A PUBLIC TRANSPORT VEHICLE**
AKUSTISCH ISOLIERBARER SITZ FÜR EIN ÖFFENTLICHES TRANSPORTFAHRZEUG
SIÈGE À ISOLATION ACOUSTIQUE POUR UN VÉHICULE DE TRANSPORT PUBLIC

(30) Priority: 30.04.2019 IT 201900006455
(43) Date of publication of application: 18.11.2020
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- EP-A1- 2 725 575
- EP-A1- 2 975 863
- WO-A2-2014/026165
- US-A1- 2016 100 250

## Description

### TECHNICAL FIELD

This invention concerns a seat for a vehicle, in particular a seat for a public transport vehicle.

### PRIOR ART

When travelling in a public transport vehicle, passengers tend to be disturbed by various noises. Some noises are involuntary, such as the snoring of a sleeping neighbour, others are voluntary such as the use of video-musical systems for video projection, others are always present, such as the noise of the vehicle engine or wheels.

Such noises, although bearable on a short journey, become unbearable on long journeys and can, therefore, lead to situations of significant stress.

It is possible to propose that travellers use headphones or earbuds to attenuate noise incoming from the surrounding areas towards the seat; however, this method is not comfortable and can cause passengers stress. Examples of such systems equipped with headphones or earbuds are illustrated in EP2975863 A1, WO2014026165 A2 or EP2725575 A1.

An example of active noise cancellation system for a vehicular seat is shown in US2016100250 A1 that discloses the features of the preamble of claim 1.

The comfort of passengers travelling in a public transport vehicle must, therefore, be improved from an acoustic point of view.

The invention aims to solve the drawbacks mentioned above.

### SUMMARY OF THE INVENTION

The above aims are achieved by a seat for a public transport vehicle according to the attached claims.

### BRIEF DESCRIPTION OF THE DRAWINGS

Additional characteristics and advantages of the invention will clearly emerge from the description that follows, by way of a non-limiting example only, with reference to the attached drawings, wherein:
- Figure 1 is a plan view in partial cross-section and partially schematic that illustrates the interior of a public transport vehicle comprising a seat according to the invention;
- Figure 2 is a view from above of a passenger sitting on a seat according to the invention; and
- Figure 3 is an enlarged view of the seat in Figure 2;

### DETAILED DESCRIPTION OF THE INVENTION

This invention will now be described with reference to a road vehicle, but it is clear that it can be applied to other types of public transport vehicles.

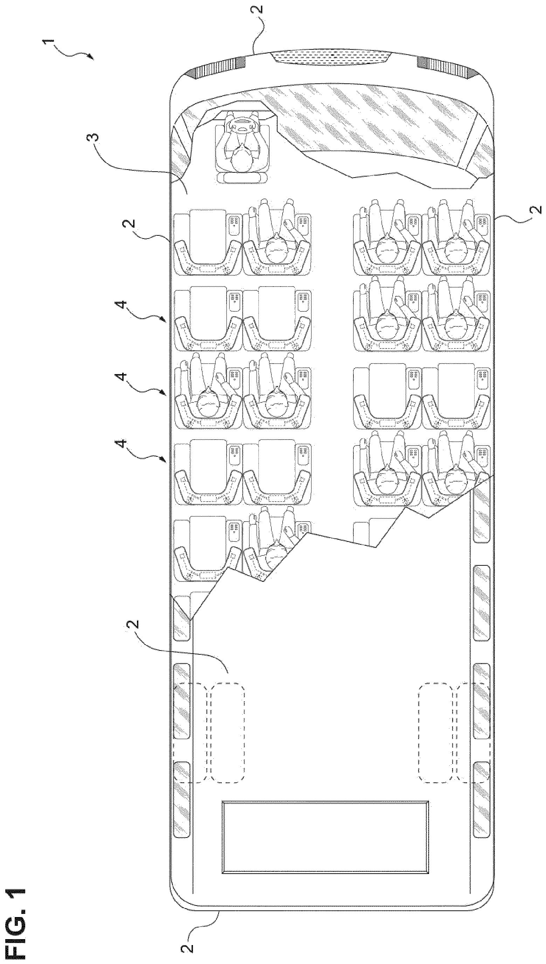

Figure 1 illustrates a public transport vehicle 1 comprising a plurality of walls 2, connected to each other to define an interior volume 3 within which passengers of the vehicle 1 can be accommodated. This interior volume 3 is equipped with various seats 4 according to the invention.

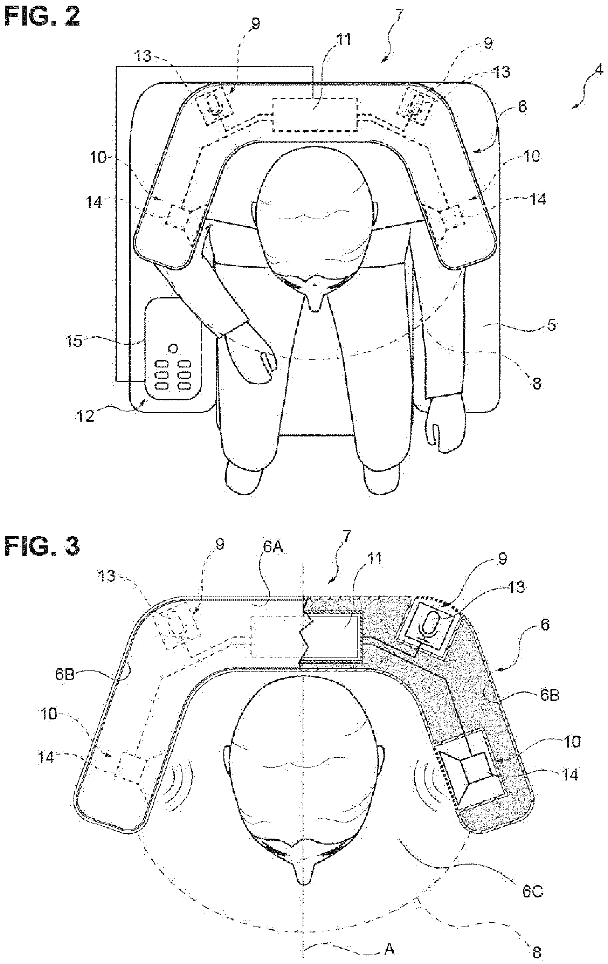

Referring to Figure 2, a seat 4 comprises a support 5 to receive the passenger's body and, preferably, a headrest 6 configured to support the passenger's head.

According to the invention, the seat 4 comprises acoustic insulation means 7 configured to define a soundproof bubble 8 in relation to noises coming from inside 3 the vehicle 1 towards the seat 4.

In particular, the acoustic insulation means 7 comprise means for receiving 9 sound waves spreading towards the seat 4, emitting means 10 for emitting sound waves towards a space located in front of the passenger, and an electronic control unit 11 configured to receive the sounds acquired by the receiving means 9 and to emit sounds via the emitting means that are complementary, at least in part, in relation to these sounds acquired to "cancel" them acoustically to define the soundproof bubble 8 mentioned above. This acoustic processing method is, in itself, of a known type and will not be described in detail.

The soundproof bubble 8 that prevents noise is preferably a space with attenuated noise, "zero" noise, or wherein predefined sounds chosen by the user can be transmitted.

The seat 4 can, therefore, also comprise selection means 12 that are electrically connected to the control unit 11 and configured to select the type of soundproof bubble 8 required by the passenger.

Advantageously, the receiving means 9 comprise microphones 13 while the emitting means 10 comprise loudspeakers 14. The selection means 12 may, for example, comprise a keypad 15.

The microphones 13, loudspeakers 14, and keypad 15 are each, preferably, electrically connected to the control unit via a wired connection.

The acoustic insulation means 7 shall, preferably, at least partially, be housed inside the headrest 6, even more preferably, be incorporated into it.

According to one embodiment described, referring, for convenience, to Figure 3, the headrest 6 has a basin shape that defines, in cross-section, a trapezoidal shape, essentially an isosceles, and open towards its longest side. The headrest 6 therefore comprises a rear wall 6a and a pair of side walls 6b extending opposite the support wall 6a, one opposite the other, to define the trapezoidal shape mentioned above. This headrest thus defines a volume 6c, basically delimited by the trapezium defined above, opened at the front and configured to receive the passenger's head.

According to the embodiment described, the acoustic insulation means 7 are fully incorporated into the headrest 6, in particular the acoustic insulation means 7 described comprise a pair of microphones 13 and a pair of loudspeakers 14, each to the right and left of a sagittal plane A of the headrest 6, respectively. The microphones 13 and loudspeakers 14 are advantageously arranged symmetrically with respect to each other about the plane A.

The microphones 13 are advantageously housed inside the support wall 6a while loudspeakers 14 are housed in an end portion of each side wall 6b. They are preferably housed opposite the open part of the volume 6c, i.e. towards the sagittal plane A of the seat 4.

In accordance with the geometric shape described, the soundproof bubble 8 shall comprise at least the volume 6c as well as a part placed in front of the passenger sitting on the seat 4. The shape and size of the bubble 8 depends on the geometry of the headrest 6 and, in particular, on the arrangement (or inclination) of the loudspeakers 14 in relation to the sagittal plane A.

The operation of the acoustic insulation means 7 as described above is as follows.

The passenger can select the type of sound (or lack thereof) using the selection means 12. This selection will be received by the control unit 11. On the basis of this selection, the control unit 11, based on the acoustic signals received from the acquisition means 9, will control the emitting means 10 to emit corresponding acoustic signals towards the sagittal plane A.

In this way, these emitted acoustic signals will "cancel out" the sounds coming from the interior 3 of the vehicle 1 and will enable the specific sound chosen by the user 2 to be emitted or silence.

From the above, the advantages of a seat for a public transport vehicle according to this invention are clearly evident.

Thanks to the acoustic insulation means 7, unwanted sounds can be attenuated by creating a comfort zone for each passenger.

In addition, these comfort zones may be different for each passenger, i.e. they may be zones of silence or music depending on the passenger's wishes.

The arrangement of the acoustic insulation means 7 inside the headrest 6 also makes it possible to install acoustic insulation means 7 on seats 4 of existing vehicles, which makes it possible to apply the invention to the whole vehicle.

Finally, it is clear that the seat for a public transport vehicle according to this invention can be subject to modifications and variations that do not, however, deviate from the scope of protection defined by the claims.

For example, it is clear that the algorithm used by the electronic control means 11 can be of any type.

In addition, it is clear that the shape of the headrest 6 may have a different shape or that the soundproofing means 7 may be arranged differently on the seat 4.

## Claims

1. A seat (4) for a vehicle (1) designed for public transport, which defines a support for a passenger of said vehicle (1), said seat (4) comprising acoustic insulation means (7) configured to acquire incoming sounds towards said seat (4), and to consequently emit sounds configured to at least partially cancel said sounds acquired in a space (8) located about said seat (4), ,said acoustic insulation means (7) being incorporated in said seat (4) and comprise acquisition means (9) for the incoming sounds towards said seat (4), sound emitting means (10) around said seat (4) and electronic control means (11) electrically connected to said acquisition and emitting means (9, 10) and configured to control said emitting means (10) on the basis of signals acquired by said acquisition means (9) so as to emit sounds to at least partially cancel said sounds acquired in said space (8),
**characterized in that** said acoustic insulation means (7) comprise selection means (12), electrically connected to said control means (11) and configured to select the type of sound, or the absence of sound, in said space (8).

2. The seat according to claim 1, wherein said acquisition means (9) comprise a microphone (13).

3. The seat according to claim 1 or 2, wherein said emitting means (10) comprise a loudspeaker (14).

4. The seat according to any of the previous claims, wherein said selection means (12) comprise a keypad (15).

5. The seat according to one of the previous claims, wherein said seat (4) comprises a seat (5) and a headrest (6), said acoustic insulation means (7) being supported on said headrest (6).

6. The seat according to claim 5, wherein said headrest (6) defines an open volume (6c) inside which the head of said passenger of said vehicle can be received, said soundproof space (8) comprising at least said volume (6c).

7. A public transport vehicle comprising a seat according to one of the previous claims.

## Patentansprüche

1. Sitz (4) für ein Fahrzeug (1), das für den öffentlichen Verkehr bestimmt ist und eine Stütze für einen Fahrgast des Fahrzeugs (1) bildet, wobei der Sitz (4) akustische Isoliermittel (7) umfasst, die so ausgeführt sind, dass sie in Richtung des Sitzes (4) ankommende Schallwellen aufnehmen und infolgedessen Schallwellen abgeben, die so ausgeführt sind, dass sie die in einem um den Sitz (4) herum angeordneten Raum (8) aufgenommenen Schallwellen zumindest teilweise auslöschen, wobei die akustischen Isoliermittel (7) in den Sitz (4) integriert sind und Aufnahmemittel (9) für die in Richtung des Sitzes (4) ankommenden Schallwellen, Schallabgabemittel (10) um den Sitz (4) herum und elektronische Steuermittel (11) umfassen, wobei die elektronischen Steuermittel (11) elektrisch mit den Aufnahme- und Schallabgabemitteln (9, 10) verbunden und so ausgeführt sind, dass sie die Schallabgabemittel (10) auf der Grundlage von durch die Aufnahmemittel (9) erfassten Signalen so steuern, dass diese Schallwellen abgeben, um die in dem Raum (8) erfassten Schallwellen zumindest teilweise auszulöschen, **dadurch gekennzeichnet, dass** die akustischen Isoliermittel (7) Auswahlmittel (12) umfassen, die elektrisch mit den Steuermitteln (11) verbunden und so ausgeführt sind, dass sie in dem Raum (8) die Art der Schallwelle oder das Fehlen von Schallwellen auswählen.

2. Sitz nach Anspruch 1, wobei die Aufnahmemittel (9) ein Mikrofon (13) umfassen.

3. Sitz nach Anspruch 1 oder 2, wobei die Schallabgabemittel (10) einen Lautsprecher (14) umfassen.

4. Sitz nach einem der vorhergehenden Ansprüche, wobei die Auswahlmittel (12) ein Tastenfeld (15) umfassen.

5. Sitz nach einem der vorhergehenden Ansprüche, wobei der Sitz (4) einen Sitz (5) und eine Kopfstütze (6) umfasst, wobei die akustischen Isoliermittel (7) an der Kopfstütze (6) gehalten werden.

6. Sitz nach Anspruch 5, wobei die Kopfstütze (6) ein offenes Volumen (6c) definiert, in dem der Kopf des Passagiers des Fahrzeugs aufgenommen werden kann, wobei der schalldichte Raum (8) zumindest das Volumen (6c) umfasst.

7. Öffentliches Verkehrsmittel umfassend Sitz nach einem der vorhergehenden Ansprüche.

## Revendications

1. Siège (4) pour un véhicule (1) conçu pour le transport public, qui définit un support pour un passager dudit véhicule (1), ledit siège (4) comprenant des moyens d'isolation acoustique (7) configurés pour acquérir des sons entrants vers ledit siège (4) et pour émettre en conséquence des sons configurés pour annuler au moins partiellement lesdits sons acquis dans un espace (8) situé autour dudit siège (4), lesdits moyens d'isolation acoustique (7) étant incorporés dans ledit siège (4) et comprennent des moyens d'acquisition (9) pour les sons entrants vers ledit siège (4), des moyens d'émission de son (10) autour dudit siège (4) et des moyens de commande électronique (11) raccordés électriquement auxdits moyens d'acquisition et d'émission (9, 10) et configurés pour commander lesdits moyens d'émission (10) sur la base des signaux acquis par lesdits moyens d'acquisition (9) afin d'émettre des sons pour annuler au moins partiellement lesdits sons acquis dans ledit espace (8),
**caractérisé en ce que** lesdits moyens d'isolation acoustique (7) comprennent des moyens de sélection (12) raccordés électriquement auxdits moyens de commande (11) et configurés pour sélectionner le type de son ou l'absence de son dans ledit espace (8).

2. Siège selon la revendication 1, dans lequel lesdits moyens d'acquisition (9) comprennent un microphone (13).

3. Siège selon la revendication 1 ou 2, dans lequel lesdits moyens d'émission (10) comprennent un haut-parleur (14).

4. Siège selon l'une quelconque des revendications précédentes, dans lequel lesdits moyens de sélection (12) comprennent un pavé numérique (15).

5. Siège selon l'une des revendications précédentes, dans lequel ledit siège (4) comprend un siège (5) et un appui-tête (6), lesdits moyens d'isolation acoustique (7) étant supportés sur ledit appui-tête (6).

6. Siège selon la revendication 5, dans lequel ledit appui-tête (6) définit un volume ouvert (6c) à l'intérieur duquel la tête dudit passager dudit véhicule peut être reçue, ledit espace insonorisé (8) comprenant au moins ledit volume (6c).

7. Véhicule de transport public comprenant un siège selon l'une des revendications précédentes.
